(19) Europäisches Patentamt
European Patent Office
Office européen des brevets

(11) **EP 3 010 980 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**27.05.2020 Patentblatt 2020/22**

(45) Hinweis auf die Patenterteilung:
**21.06.2017 Patentblatt 2017/25**

(21) Anmeldenummer: **14736282.6**

(22) Anmeldetag: **28.05.2014**

(51) Int Cl.:
***C09C 1/00*** *(2006.01)*

(86) Internationale Anmeldenummer:
**PCT/EP2014/001436**

(87) Internationale Veröffentlichungsnummer:
**WO 2014/202180 (24.12.2014 Gazette 2014/52)**

(54) **TRANSPARENTE, OPTISCH VARIABLE INTERFERENZPIGMENTE MIT ELEKTRISCH HALBLEITFÄHIGEN EIGENSCHAFTEN**

TRANSPARENT, OPTICALLY VARIABLE INTERFERENCE PIGMENTS WITH ELECTRICAL SEMI-CONDUCTING PROPERTIES

PIGMENTS D'INTERFÉRENCE OPTIQUEMENT VARIABLES ET TRANSPARENTS, AUX PROPRIÉTÉS ÉLECTRIQUEMENT SEMI-CONDUCTRICES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2013 EP 13003083**

(43) Veröffentlichungstag der Anmeldung:
**27.04.2016 Patentblatt 2016/17**

(73) Patentinhaber: **Merck Patent GmbH**
**64293 Darmstadt (DE)**

(72) Erfinder: **RUEGER, Reinhold**
**63322 Roedermark (DE)**

(56) Entgegenhaltungen:
**EP-A1- 0 139 557          EP-A1- 0 373 575**
**EP-A1- 0 735 115          WO-A1-95/33009**
**WO-A1-97/43347          WO-A1-2005/071018**
**WO-A2-2009/077122      US-A- 5 693 135**

## Beschreibung

Die vorliegende Erfindung betrifft transparente, optisch variable, elektrisch halbleitfähige Interferenzpigmente, insbesondere plättchenförmige Interferenzpigmente, die eine sauerstoff-defizitäre Schicht aus $TiO_{2-x}$ enthalten, ein Verfahren zur Herstellung solcher Pigmente sowie die Verwendung der so hergestellten Pigmente.

Pigmente mit winkelabhängigen Interferenzfarben (Farbflop, optisch variables Verhalten) finden heute vielfältige Anwendungen zur attraktiven Farbgestaltung in hochwertigen Gütern wie Markenartikeln, Verpackungen, Sportbekleidung, Kosmetika, und vor allen Dingen in nicht kopierbaren Sicherheitsmerkmalen für Sicherheitsprodukte wie Geldscheine, Tickets, Steuerbanderolen und dergleichen. Dafür zur Verfügung stehende Pigmente haben oft einen Mehrschichtaufbau aus verschiedenen Materialien unterschiedlicher Brechzahlen auf geeigneten Trägermaterialien.

Obwohl die mit diesen Pigmenten erhältlichen optisch variablen Sicherheitsmerkmale mit bloßem Auge gut erkennbar, aber nicht kopierbar sind, reichen sie für Hochsicherheitsanwendungen wie den Geldscheindruck nicht aus, um Fälschungssicherheit herzustellen. Daher werden in jüngster Zeit optisch variable Effekte häufig auch mit funktionellen Effekten wie Magnetismus, Fluoreszenz, elektrischer Leitfähigkeit oder auch Elektrolumineszenz kombiniert, um den Anforderungen an Fälschungsschutz und Nichtkopierbarkeit von Sicherheitsprodukten besser gerecht werden zu können. Im einfachsten Falle werden dafür einzelne Pigmente, die jeweils verschiedene Funktionen oder Farbeigenschaften aufweisen, miteinander kombiniert.

So ist beispielsweise in der EP 1 748 903 ein maschinenlesbares, elektrolumineszierendes Sicherheitsmerkmal beschrieben, bei dem in einer Beschichtung transparente elektrisch leitfähige Pigmente und elektrolumineszierende Pigmente gemeinsam angewendet werden um als verstecktes Sicherheitsmerkmal Elektrolumineszenz zu erzeugen. Dieses kann durch Zumischen optisch variabler Pigmente in ein kombiniertes sichtbares/verstecktes Sicherheitsmerkmal erweitert werden. Die dabei verwendeten transparenten elektrisch leitfähigen Pigmente weisen eine hohe Leitfähigkeit auf und bestehen bevorzugt aus mit Antimon dotiertem Zinndioxid beschichtetem Glimmer.

Auch aus EP 0 960 912 sind Anwendungen bekannt, bei denen optisch variable Pigmente mit elektrisch leitfähigen Pigmenten auf Glimmer/ $(Sb,Sn)O_2$-Basis im Anwendungsmedium gemischt werden, um beide Effekte vorteilhaft miteinander zu kombinieren.

Der mit $(Sb,Sn)O_2$ beschichtete Glimmer ist dabei zwar weitestgehend transparent, weist jedoch eine, wenn auch helle, Eigenfarbe (Absorptionsfarbe) auf. Diese und die durch die leitfähigen Pigmente verursachte Lichtstreuung führen zu Farbverschiebungen oder zur Abschwächung des Farbwechseleffekts (Farbflop) in der die Pigmente enthaltenden Beschichtung.

Es wäre daher vorteilhaft, Pigmente zur Verfügung zu haben, die sowohl über optisch variable Farbeigenschaften als auch über eine gut steuerbare elektrische Leitfähigkeit verfügen.

Es ist bekannt, dass Titansuboxide über eine gewisse elektrische Leitfähigkeit verfügen. Des Weiteren sind aus dem Stand der Technik Pigmente bekannt, die auf einem geeigneten Trägermaterial unter anderem auch mit Titansuboxiden beschichtet sind.

So sind aus DE 199 53 655 goniochromatische Glanzpigmente bekannt, die auf silikatischen Plättchen eine Titansuboxide enthaltende Schicht sowie weitere niedrig- und hochbrechende Schichten aufweisen. Die Titansuboxide verleihen den Pigmenten eine blaue Absorptionsfarbe sowie ein erhöhtes Deckvermögen. Bedingt durch die Überlagerung der Titansuboxidschicht mit mehreren dielektrischen Schichten ist eine gezielte Erzeugung einer bestimmten elektrischen Leitfähigkeit nicht zu erwarten und auch nicht Bestandteil dieser Erfindung.

Aus EP 1 114 104 sind optisch variable Pigmente auf $SiO_2$-Basis bekannt, die auf dem $SiO_2$-Träger Titandioxid, Titansuboxide und weitere Oxide oder Oxynitride enthalten. Die Reduktion mit einem festen Reduktionsmittel verleiht den Pigmenten Deckvermögen und Absorptionsfarbe neben der optischen Variabilität. Die gegebenenfalls vorhandene elektrische Leitfähigkeit der Pigmente ist nicht Gegenstand der Untersuchungen.

Die in den beiden letztgenannten Dokumenten beschriebenen Pigmente weisen dunkle Körperfarben auf, so dass sie für transparente Beschichtungen oder Druckschichten, insbesondere auf weißem Grund, nicht geeignet sind.

Es sind gemäß der WO 2009/077122 optisch variable Pigmente mit hoher Leitfähigkeit zugänglich, die auf einem vorzugsweise aus $SiO_2$ bestehenden Substrat eine elektrisch leitfähige Beschichtung aufweisen, die vorzugsweise aus mit Antimon dotiertem Zinnoxid besteht. Die helle Absorptionsfarbe dieser Pigmente kann jedoch in anspruchsvollen Anwendungen, insbesondere im Hochsicherheitsbereich, immer noch als störend empfunden werden. Außerdem sind für spezielle Anwendungen auch halbleitfähige Eigenschaften besser geeignet als eine hohe elektrische Leitfähigkeit von Additiven.

Es besteht daher immer noch ein Bedarf an transparenten, elektrisch leitfähigen Interferenzpigmenten, die über attraktive bunte Interferenzfarben bei gleichzeitiger Winkelabhängigkeit der Interferenzfarben (optisch variables Verhalten) und eine nur geringfügige, insbesondere keine, Körperfarbe (Absorptionsfarbe) verfügen und deren elektrische Eigenschaften gezielt im halbleitfähigen Bereich eingestellt werden können.

Aufgabe der vorliegenden Erfindung ist es, ein transparentes Interferenzpigment mit bunten, optisch variablen Interferenzfarben und definierten elektrisch halbleitenden Eigenschaften zur Verfügung zu stellen, welches keine oder nur eine äußerst geringe Eigenabsorption aufweist.

Eine weitere Aufgabe der vorliegenden Erfindung besteht darin, die Verwendung derartiger Pigmente aufzuzeigen.

Darüber hinaus ist es auch Aufgabe der vorliegenden Erfindung, ein Sicherheitsprodukt zur Verfügung zu stellen, welches die beschriebenen Interferenzpigmente enthält.

Die Aufgabe der vorliegenden Erfindung wird gelöst durch transparente, optisch variable, elektrisch halbleitfähige, plättchenförmige Interferenzpigmente gemäß Anspruch 1.

Des Weiteren wird die Aufgabe der Erfindung gelöst durch die Verwendung der vorab beschriebenen Interferenzpigmente in Farben, Lacken, Druckfarben, Kunststoffen, Sensoren, Sicherheitsanwendungen, Fußbodenbelägen, Textilien, Folien, keramischen Materialien, Gläsern, Papier, zur Lasermarkierung, im Wärmeschutz, als Photohalbleiter, in pigmenthaltigen Formulierungen, Pigmentpräparationen und Trockenpräparaten.

Zusätzlich wird die Aufgabe der vorliegenden Erfindung auch durch ein Sicherheitsprodukt gelöst, welches die erfindungsgemäßen Interferenzpigmente enthält.

Gegenstand der vorliegenden Erfindung ist ein transparentes, elektrisch halbleitfähiges, optisch variables, plättchenförmiges Interferenzpigment, welches auf einem plättchenförmigen Träger basiert und mit einer oder mehreren optisch aktiven Schichten beschichtet ist, wobei jeweils zumindest die äußere Schicht der Beschichtung auf dem Träger aus einem Titanoxid der Zusammensetzung $TiO_{2-x}$ besteht, wobei gilt: $0,01 \leq x \leq 0,04$. Bei einer solchen Zusammensetzung handelt es sich nicht um ein Titansuboxid, sondern vielmehr um ein sauerstoffdefizitäres Titandioxid. Da die Bildung von niederen Titanoxiden, Titansuboxiden oder Magnéli-Phasen wie TiO, $Ti_2O_3$, $Ti_3O_5$, $Ti_2O$, $Ti_3O$, $Ti_6O$ bzw. $Ti_nO_{2n-1}$ stets mit einer Eigenabsorption der diese enthaltenden Schichten einhergeht, ist es gemäß der vorliegenden Erfindung von besonderer Bedeutung, dass die aus $TiO_{2-x}$ bestehende Schicht solche niederen Titanoxide, Titansuboxide oder Magnéli-Phasen nicht enthält. Die Zusammensetzung der $TiO_{2-x}$-Schicht ist $TiO_{1,96}$ bis $TiO_{1,99}$, wobei gilt: $0,01 \leq x \leq 0,04$.

Die Transparenz T von Interferenzpigmenten lässt sich über Helligkeitswerte $L^*$ von Beschichtungen, welche die Interferenzpigmente enthalten, auf Schwarz/Weiß-Lackkarten bestimmen. Die Messungen erfolgen im $CIEL^*a^*b^*$-Farbraum mittels eines geeigneten Messgerätes, beispielsweise einem ETA-Device (STEAG-ETA Optic GmbH, Inc.) Die Messungen werden im Körperfarbenwinkel 45°/90° jeweils über der beschichteten schwarzen und weißen Lackkarte ausgeführt. Die ermittelbare Transparenz T verhält sich dabei umgekehrt proportional zum Deckvermögen und kann nach der folgenden Gleichung ermittelt werden:

$$T = (L^*_{45/90/weiß} - L^*_{45/90/schwarz})/100$$

(Ermittlung des Deckvermögens DV nach Hofmeister (Colorimetric evaluation of pearlescent pigments, Congress "Mondial Coleur 85", Monte carlo, 1985 nach der Gleichung $DV = 100/(L^*_{45/90/weiß} - L^*_{45/90/schwarz})$).

Die erfindungsgemäßen Interferenzpigmente weisen eine nach der vorab genannten Gleichung ermittelte Transparenz von >0,35, vorzugsweise von > 0,40, auf.

Die erfindungsgemäßen Interferenzpigmente weisen vorzugsweise eine nur sehr geringe und vorzugsweise keine Körperfarbe (Absorptionsfarbe) auf. Ein Maß für die Körperfarbe stellt die oben genannte Messung des $L^*$-Wertes bei einem Winkel von 45°/90° über der weißen Lackkarte dar.

Da jede Körperfarbe die Reflexion über weiß und damit den erhältliche $L^*$-Wert vermindert und die erfindungsgemäßen Interferenzpigmente lediglich eine sehr geringe bis keine Körperfarbe aufweisen dürfen, liegt der $L^*$-Wert über weiß bei 45°/90° (=45°/0°) der erfindungsgemäßen Pigmente bei einem Pigmentauftrag von 5 $g/m^2$ bei einem Wert $L^* \geq 70$ und damit sehr hoch.

Als plättchenförmig werden Pigmente oder Trägermaterialien bezeichnet, wenn ihre äußere Form einem flachen Gebilde entspricht, welches mit seiner Ober- und Unterseite zwei annähernd parallel zueinander stehende Oberflächen aufweist, deren Ausdehnung in Länge und Breite die größte Ausdehnung des Pigmentes oder des Trägermaterials darstellt. Der Abstand zwischen den genannten Oberflächen, der die Dicke des Plättchens darstellt, weist dagegen eine geringere Ausdehnung auf.

Die Ausdehnung der Pigmente in Länge und Breite beträgt dabei zwischen 2 und 250 μm, vorzugsweise zwischen 2 und 100 μm, und insbesondere zwischen 5 und 60 μm. Sie stellt auch den Wert dar, der gewöhnlich als die Teilchengröße der Interferenzpigmente bezeichnet wird. Diese ist als solche nicht kritisch, allerdings ist eine enge Teilchengrößenverteilung der erfindungsgemäßen Interferenzpigmente bevorzugt. Besonders bevorzugt ist ein reduzierter Feinanteil. Dabei liegt der Anteil von Partikeln mit einer Teilchengröße unterhalb von 10 μm bei <5 Gew.-%, bezogen auf das Gesamtgewicht der Pigmente. Der $d_{90}$-Wert liegt bevorzugt im Bereich von 40 bis 45 μm.

Die Teilchengröße und die Teilchengrößenverteilung können über verschiedene fachübliche Methoden ermittelt werden. Bevorzugt wird erfindungsgemäß jedoch die Laserbeugungsmethode in einem Standardverfahren mittels eines Malvern Mastersizer 2000, APA200 (Produkt der Fa. Malvern Instruments Ltd., UK) eingesetzt. Diese Verfahren hat den Vorteil, dass Partikelgröße und Partikelgrößenverteilung gleichzeitig unter Standardbedingungen bestimmt werden können.

Die Partikelgröße sowie die Dicke von Einzelpartikeln lässt sich außerdem mit Hilfe von SEM (Scanning Electron Microscope) Bildern ermitteln. Bei diesen können Partikelgröße und geometrische Partikeldicke über direktes Ausmessen ermittelt werden. Zur Ermittlung von Durchschnittswerten werden mindestens 1000 Partikel einzeln ausgewertet und die Ergebnisse gemittelt.

Die Dicke der Interferenzpigmente beträgt zwischen 0,3 und 4 $\mu$m, insbesondere zwischen 0,5 und 3 $\mu$m.

Die erfindungsgemäßen Interferenzpigmente weisen einen Formfaktor (Verhältnis von Länge bzw. Breite zu Dicke) im Bereich von 2:1 bis 500:1 auf, bevorzugt im Bereich von 20:1 bis 300:1.

Das elektrisch halbleitfähige Pigment gemäß der vorliegenden Erfindung weist einen spezifischen Pulverwiderstand im Bereich von 0,1 bis 100 MegaOhm\*cm auf. Bevorzugt weisen die erfindungsgemäßen Interferenzpigmente einen spezifischen Pulverwiderstand im Bereich von 1 bis 80 MegaOhm\*cm, insbesondere im Bereich von 10 bis 60 MegaOhm\*cm, auf. Die hier angegebenen Werte beziehen sich auf Feldstärken von bis zu 10 V/mm, wobei sich die Feldstärke auf die angelegte Meßspannung bezieht.

Die Messung des spezifischen Pulverwiderstandes erfolgt dabei in der Weise, dass in einem Acrylglas-Rohr mit einem Durchmesser von 2 cm eine Menge von jeweils 0,5 g Pigment mit Hilfe eines Gewichts von 10 kg mit einem Metallstempel gegen eine Metallelektrode zusammengepresst wird. An den so verpressten Pigmenten wird der elektrische Widerstand R gemessen. Aus der Schichtdicke L des komprimierten Pigmentes ergibt sich der spezifische Widerstand p gemäß der folgenden Beziehung:

$$\rho = R^* \, \pi^*(d/2)^2/L \; (Ohm^*cm),$$

Optisch variable Pigmente sind solche Pigmente, die unter verschiedenen Beleuchtungs- und/oder Betrachtungswinkeln einen unterschiedlichen visuell wahrnehmbaren Farb- und/oder Helligkeitseindruck hinterlassen. Bei unterschiedlichen Farbeindrücken wird diese Eigenschaft als Farbflop bezeichnet. Bevorzugt weisen die erfindungsgemäßen optisch variablen Pigmente unter mindestens zwei verschiedenen Beleuchtungs- und/oder Betrachtungswinkeln mindestens zwei und höchstens vier, vorzugsweise aber unter zwei verschiedenen Beleuchtungs- und/oder Betrachtungswinkeln zwei oder unter drei verschiedenen Beleuchtungs- und/oder Betrachtungswinkeln drei optisch klar unterscheidbare diskrete Farben auf. Vorzugsweise liegen jeweils nur die diskreten Farbtöne und keine Zwischentöne vor, dass heisst, dass unter verschiedenen Betrachtungswinkeln ein klarer Wechsel von einer Farbe zu einer anderen Farbe erkennbar ist. Es sind jedoch auch Ausführungsformen geeignet, die beim Wechsel des Betrachtungswinkels einen Farbverlauf zeigen.

In einer ersten Ausführungsform (a) besteht das transparente, plättchenförmige Interferenzpigment gemäß der vorliegenden Erfindung aus einem plättchenförmigen Träger, welcher eine Dicke von mindestens 80 nm aufweist und zu mindestens 80 Gew.-%, bezogen auf die Gesamtmasse des Trägers, aus Siliziumdioxid und/oder Siliziumdioxidhydrat besteht, wobei der Träger mit mindestens einer Schicht beschichtet ist, die aus $TiO_{2-x}$ mit $0,01 \leq x \leq 0,04$ besteht und wobei diese Schicht zumindest die äußere Schicht auf dem Träger darstellt.

Der plättchenförmige Träger besteht zu mindestens 80 Gew.-%, bezogen auf die Gesamtmasse des Substrates, aus Siliziumdioxid und/oder Siliziumoxidhydrat. Vorzugsweise besteht der Träger zu 95 bis nahezu 100 Gew.-% aus Siliziumoxid und/oder Siliziumoxidhydrat, wobei lediglich Spuren oder geringe prozentuale Anteile von Fremdionen enthalten sein können.

Solche Träger werden auch als $SiO_2$-Plättchen bezeichnet, selbst wenn sie Anteile an hydratisiertem Siliziumoxid enthalten. Sie sind hochtransparent und farblos. Sie weisen ebene und sehr glatte Oberflächen und eine einheitliche Schichtdicke auf. Bedingt durch das weiter unten beschriebene bevorzugte Herstellungsverfahren für die $SiO_2$-Plättchen besitzen diese an den Seitenflächen scharfe Bruchkanten, die spitze, zackenartige Ausstülpungen aufweisen können. Besonders bevorzugt sind Träger, die eine enge Teilchengrößenverteilung aufweisen, insbesondere solche, bei denen der Feinkornanteil minimiert ist, wie oben bereits beschrieben.

In der einfachsten Variante der ersten Ausführungsform der vorliegenden Erfindung besteht das erfindungsgemäße Pigment aus dem vorab beschriebenen, $SiO_2$-haltigen Träger und einer den Träger umhüllenden Schicht aus $TiO_{2-x}$ in der oben genannten Zusammensetzung und mit den oben genannten Ausmaßen. Bedingt durch den einfachen Schichtaufbau ist diese Variante der ersten Ausführungsform besonders bevorzugt. Dabei kann $TiO_{2-x}$ sowohl in der Anatas- als auch in der Rutilmodifikation vorliegen. Ausgangsprodukt für die Herstellung solcher Pigmente sind plättchenförmige, mit $TiO_2$ beschichtete $SiO_2$-Pigmente, die kommerziell erhältlich sind und beispielsweise unter dem Markennamen Colorstream® von der Merck KGaA Darmstadt vertrieben werden. Solche Pigmente können jedoch auch gemäß dem in WO 93/08237 beschriebenen Verfahren hergestellt werden. Die analog zu diesem Verfahren hergestellten Pigmente sollten jedoch keine gelösten oder ungelösten Farbmittel enthalten. Die Trägerplättchen werden aus dem entsprechenden, vorzugsweise anorganischen, $SiO_2$-Precursor-Material (z. B. Natriumwasserglaslösung) in einem Bandverfahren erzeugt, wobei der Precursor auf das Band aufgebracht, mit Säure in die oxidische Form bzw. in das Oxidhydrat überführt, verfestigt und anschließend vom Band abgelöst wird. Die geometrische Schichtdicke der Plättchen wird über die Auftragsmenge bzw. Nassschichtdicke der Precursorschicht eingestellt, was sehr präzise möglich ist. Anschließend werden die $SiO_2$-Plättchen gemäß einem ebenfalls in WO 93/08237 beschriebenen nasschemischen Verfahren mit $TiO_2$ beschichtet. Dabei kann das $TiO_2$ in der Anatas- oder der Rutilmodifikation vorliegen. Die Überführung von $TiO_2$ in $TiO_{2-x}$ gemäß der vorliegenden Erfindung wird weiter unten beschrieben.

Die Teilchengröße der $SiO_2$-Trägerplättchen liegt in demselben Bereich wie die oben angegebenen Teilchengrößen für die erfindungsgemäßen Interferenzpigmente, nämlich im Bereich zwischen 2 und 250 $\mu$m, vorzugsweise zwischen 2 und 100 $\mu$m, und insbesondere zwischen 5 und 60 $\mu$m. Die Dicke der Trägerplättchen beträgt mindestens 80 nm und bis zu 4 $\mu$m, vorzugsweise 80 nm bis 1 $\mu$m, insbesondere 80-700 nm, und ganz besonders bevorzugt 180 bis 550 nm. Bei einer Dicke unterhalb 80 nm mit einer einzigen Schicht aus $TiO_{2-x}$ auf dem Träger wäre ein optisch variables Farbverhalten der entstehenden Pigmente nicht gewährleistet. Trägerdicken über 4 $\mu$m führen, insbesondere bei einem Mehrschichtaufbau, zu sehr dicken Interferenzpigmenten, die sich in den Anwendungsmedien nur schwer ausrichten lassen und damit das optisch variable Verhalten ebenfalls reduzieren.

In einer zweiten Variante der ersten Ausführungsform besteht der plättchenförmige Träger ebenfalls zu mindestens 80 Gew.-%, bezogen auf die Gesamtmasse des Trägers, aus Siliziumdioxid und/oder Siliziumdioxidhydrat, und auf dem Träger ist eine Schichtfolge aus mindestens drei Schichten aufgebracht, wobei

- eine erste Schicht aus einem farblosen Material mit einer Brechzahl n $\geq$ 1,8 besteht,
- eine zweite Schicht aus einem farblosen Material mit einer Brechzahl n < 1,8 besteht, sowie
- eine dritte, äußere Schicht aus einem farblosen Material mit einer Brechzahl n $\geq$ 1,8 besteht,

wobei mindestens die dritte, äußere Schicht aus $TiO_{2-x}$ besteht und wobei 0,01 $\leq$ x $\leq$ 0,04 ist.

Die für die erste und zweite Schicht geeigneten Materialien werden weiter unten erläutert.

Mindestens die dritte, äußere Schicht besteht jedoch aus $TiO_{2-x}$ mit 0,01 $\leq$ x $\leq$ 0,04. Diese Schicht stellt, ebenso wie eine Schicht aus stöchiometrischem $TiO_2$, eine farblose Schicht aus einem hoch brechenden Material dar, da $TiO_{2-x}$ ebenso wie $TiO_2$ eine Brechzahl im Bereich von 2,0 bis 2,7 aufweist. Die konkrete Brechzahl des Materials hängt insbesondere auch von der Kristallmodifikation ab, in der das $TiO_{2-x}$ vorliegt. Dabei weist die Rutilmodifikation eine höhere Brechzahl auf als die Anatasmodifikation und ist daher bevorzugt. Dies gilt für alle Ausführungsformen der vorliegenden Erfindung.

In einer zweiten Ausführungsform der vorliegenden Erfindung (b) befindet sich auf einem plättchenförmigen Träger ein Schichtpaket aus mindestens drei Schichten aus farblosen Materialien von abwechselnd hoher und niedriger Brechzahl gemäß Anspruch 1, wobei zumindest die äußere, dritte Schicht aus $TiO_{2-x}$ mit 0,01 $\leq$ x $\leq$ 0,04 besteht.

Gegenüber der zweiten Variante der ersten Ausführungsform unterscheidet sich die zweite Ausführungsform der vorliegenden Erfindung durch andere Trägermaterialien und eine Limitierung der Schichtdicke der zweiten Schicht aus einem farblosen Material mit einer Brechzahl n < 1,8.

Als Trägermaterial für die zweite Ausführungsform kommen natürliche oder synthetische Glimmerplättchen, Plättchen aus Kaolin, Sericit oder Talk, Glasplättchen, Borosilikatplättchen, $Al_2O_3$-Plättchen oder Gemische aus zwei oder mehreren von diesen in Betracht. Besonders bevorzugt sind natürliche oder synthetische Glimmerpättchen. Die Teilchengröße der Trägerplättchen liegt in demselben Bereich wie die oben angegebenen Teilchengrößen für die erfindungsgemäßen Interferenzpigmente, nämlich im Bereich zwischen 2 und 250 $\mu$m, vorzugsweise zwischen 2 und 100 $\mu$m, und insbesondere zwischen 5 und 60 $\mu$m. Die Dicke dieser Trägerplättchen liegt im Bereich von 0,2 bis 1,5 $\mu$m, insbesondere im Bereich von 0,3 bis 1 $\mu$m.

Bedingt durch die Verschiedenheit der Trägerplättchen in der zweiten Ausführungsform der vorliegenden Erfindung kann ein optisch variables Verhalten der resultierenden Interferenzpigmete durch das Trägermaterial nicht sicher gestellt werden. Daher weist die zweite Beschichtung in dem Schichtpaket auf demTräger, die aus einem farblosen Material mit einer Brechzahl n < 1,8 besteht, eine geometrische Schichtdicke (Trockenschichtdicke) von mindestens 50 nm auf, insbesondere im Bereich von 50 bis 300 nm und besonders bevorzugt im Bereich von 120 bis 250 nm. Diese hohe Schichtdicke der niedrig brechenden Schicht führt bei allen vorab genannten Trägermaterialien zu einem optisch variablen Farbverhalten der resultierenden Pigmente, wenn die Schichtdicken der hoch brechenden Schichten (n $\geq$ 1,8) daran angepasst werden.

Als Material für die zweite Schicht aus einem Material mit einer Brechzahl n < 1,8 kommen sowohl für die erste als auch für die zweite Ausführungsform der vorliegenden Erfindung $SiO_2$, $Al_2O_3$, Siliziumoxidhydrat, Aluminiumoxidhydrat, $MgF_2$, oder Gemische von zwei oder mehreren von diesen in Frage. Bevorzugt werden $SiO_2$, Siliziumdioxidhydrat oder Gemische daraus eingesetzt. Bei der ersten Ausführungsform ist lediglich die Schichtdicke dieser Schicht nicht besonders limitiert, sondern kann im Bereich von 1 bis 300 nm, vorzugsweise 50 bis 250 nm, liegen.

Das farblose Material mit einer Brechzahl $\geq 1,8$ für die erste Schicht in dem Schichtpaket auf den Trägerplättchen kann aus $TiO_2$, Titandioxidhydrat, $ZnO$, $ZrO_2$ und/oder Mischphasen aus diesen, oder aber ebenfalls aus $TiO_{2-x}$ mit $0,01 \leq x \leq 0,04$ ausgewählt werden. Dies trifft sowohl für die erste als auch für die zweite Ausführungsform der vorliegenden Erfindung zu.

Vorzugsweise wird dieses Material aus $TiO_2$, Titandioxidhydrat oder $TiO_{2-x}$ ausgewählt. $TiO_2$ und $TiO_{2-x}$ liegen dabei jeweils in einer kristallinen Phase, und zwar in der Anatas- oder der Rutilmodifikation vor. Wegen der höheren Brechzahl ist die Rutilmodifikation bevorzugt.

Bevorzugt ist dabei sowohl die Variante, bei der die erste Schicht in dem Schichtpaket auf dem Trägerplättchen aus $TiO_2$ besteht, als auch die Variante, bei der alle Schichten aus einem farblosen Material mit einer Brechzahl $n \geq 1,8$ aus $TiO_{2-x}$ mit $0,01 \leq x \leq 0,04$ bestehen.

Die Schichtdicken aller Schichten aus einem Material mit einer Brechzahl $n \geq 1,8$, also der ersten und dritten Schichten im Schichtpaket der ersten und zweiten Ausführungsform, beträgt, unabhängig von den jeweiligen Materialien, jeweils 50 bis 200 nm, insbesondere 60 bis 100 nm, und wird abhängig von der gewünschten Farbstellung der Interferenzfarben der erfindungsgemäßen Pigmente fachgemäß eingestellt.

Es ist dem Fachmann bekannt, dass eine Rutilmodifikation von $TiO_2$ durch Dotierung der Schicht mit $SnO_2$ oder durch unterschichten einer $TiO_2$-Schicht mit einer Schicht aus $SnO_2$ begünstigt werden kann. Dies trifft auch auf die sauerstoffdefizitäre $TiO_{2-x}$-Schicht gemäß der vorliegenden Erfindung zu. Vorteilhafterweise befindet sich daher zwischen dem transparenten, plättchenförmigen Träger und der Schicht aus $TiO_{2-x}$ und/oder direkt unterhalb jeder Schicht aus $TiO_2$ oder $TiO_{2-x}$ in den jeweiligen Schichtpaketen der ersten und zweite Ausführungsform der vorliegenden Erfindung eine zusätzliche Schicht aus $SnO_2$.

Für die Induzierung einer Rutil-Kristallphase in der $TiO_{2-x}$-Schicht oder der $TiO_2$-Schicht ist es ausreichend, wenn eine $SnO_2$-Schicht mit sehr geringer Schichtdicke unterhalb der $TiO_{2-x}$-Schicht oder der $TiO_2$-Schicht vorhanden ist. Die geometrische Schichtdicke dieser $SnO_2$-Schicht liegt daher im Bereich von 0,5 bis 15 nm, insbesondere von 1 bis 10 nm, womit diese Schicht eine optisch nicht aktive Schicht darstellt.

Alternativ oder zusätzlich zu einer derartigen $SnO_2$-Schicht kann die $TiO_{2-x}$-Schicht und/oder die $TiO_2$-Schicht in einer bevorzugten Ausführungsform mit 0,1 bis 3 Mol-% Sn dotiert sein.

Die ersten bis dritten Schichten im Schichtpaket auf den Trägerplättchen der ersten und zweiten Ausführungsform der vorliegenden Erfindung stellen vorzugsweise jeweils alle optisch aktive Schichten dar. Als optisch aktive Schichten werden in Interferenzpigmenten solche Schichten angesehen, die auf Grund ihrer optischen Dicke (Produkt aus geometrischer Dicke und Brechzahl des Materials) einen eigenständigen Beitrag zur Interferenzfarbe liefern können. Dabei kann es sich jeweils um die Verstärkung, die Abschwächung oder auch die Auslöschung der Reflexion von Licht einer bestimmten Wellenlänge handeln. Das ist bei hoch brechenden Materialien ($n \geq 1,8$) ab einer geometrischen Schichtdicke von etwa 10 nm der Fall, bei niedrig brechenden Materialien ($n < 1,8$) dagegen erst ab einer geometrischen Schichtdicke von etwa 20 nm. Lediglich die Schicht aus einem Material mit einer Brechzahl $< 1,8$ in der ersten Ausführungsform der vorliegenden Erfindung muss dieser Bedingung nicht zwangsläufig genügen, genügt ihr aber in vorteilhafter Weise.

Nicht zu den optisch aktiven Schichten zählen beispielsweise übliche Nachbeschichtungen, die sowohl anorganischer als auch organischer Natur sein können und Pigmenten bei Bedarf eine bessere Einarbeitung in die jeweiligen Applikationsmedien ermöglichen.

Die Varianten in den beiden Ausführungsformen der vorliegenden Erfindung, bei denen sowohl die erste als auch die dritte Schicht im Schichtpaket auf den Trägerplättchen aus $TiO_{2-x}$ bestehen, haben insbesondere den Vorteil, dass die elektrische Leitfähigkeit der jeweiligen $TiO_{2-x}$-Schichten unterschiedlich gestaltet werden kann. Da in jeder dieser Schichten separat $TiO_2$ in $TiO_{2-x}$ überführt werden muss, kann durch die jeweils unterschiedliche Gestaltung der Bedingungen für die erforderliche Reduktionsreaktion das Sauerstoffdefizit in den einzelnen Schichten unterschiedlich stark ausfallen. Bei Verminderung des Sauerstoffdefizits in der ersten $TiO_{2-x}$- Schicht erhöht sich die Transparenz des Gesamtpigmentes weiter, ohne dass die Gesamtleitfähigleit des erfindungsgemäßen Interferenzpigmentes stark vermindert wird, da die Leitfähigkeit der Pigmente im Wesentlichen durch die Leitfähigkeit der äußeren Schicht bestimmt wird.

Die Herstellung der erfindungsgemäßen Interferenzpigmente erfolgt im Wesentlichen auf die gleiche Art und Weise wie die Herstellung üblicher Interferenzpigmente, die durch Aufbringen hoch- und/oder niedrig brechender Materialien in Schichten auf geeignete Trägerplättchen erfolgt. Bezüglich der mindestens äußeren $TiO_{2-x}$-Schicht wird ein transparentes, plättchenförmiges Interferenzpigment, welches aus einem beschichteten transparenten, plättchenförmigen Träger, welcher auf seiner äußeren Oberfläche eine Schicht aus $TiO_2$ aufweist, besteht, in einer Gasphase unter Zusatz eines Reduziergases über einen Zeitraum im Bereich von 5 bis 60 Minuten thermisch behandelt, wobei das $TiO_2$ zu $TiO_{2-x}$ umgesetzt wird und $0,01 \leq x \leq 0,04$ ist.

Das Verfahren zur Erzeugung solcher $TiO_{2-x}$-Schichten ist in der parallel eingereichten Patentanmeldung EP 13 003 084.4 der gleichen Anmelderin genauer beschrieben. Auf den Inhalt dieser Patentanmeldung wird insofern verwiesen.

Ausgangsmaterial für das Verfahren zur Herstellung einer $TiO_{2-x}$-Schicht auf den erfindungsgemäßen Interferenzpigmenten ist ein plättchenförmiges Interferenzpigment, welches aus einem plättchenförmigen Träger besteht, der zumindest auf seiner äußeren Oberfläche mit einer $TiO_2$-Schicht beschichtet ist.

Als $TiO_2$ bzw. $TiO_2$-Schicht wird hier auch ein Material oder eine Schicht bezeichnet, die ganz oder überwiegend aus Titandioxidhydrat besteht, weil eine Trocknung der entsprechenden Oxidhydratschicht ohne Kalzinierung nicht immer verlässlich zu einer Titandioxidschicht führt, sondern aus Titandioxidhydrat bestehen oder eine Mischzusammensetzung aus Titandioxid und Titandioxidhydrat aufweisen kann. Die aufgebrachte und getrocknete Titandioxidschicht kann direkt nach dem Trocknen dem nachstehend beschriebenen Verfahren unterzogen werden, sie kann jedoch auch zunächst bei höherer Temperatur unter Luft geglüht und in einem weiteren Schritt reduzierend behandelt werden.

Die Herstellung von Interferenzpigmenten, die auf einem Träger zumindest mit einer äußeren Schicht aus $TiO_2$ beschichtet sind, erfolgt nach den üblichen Verfahren zur Herstellung von Interferenzpigmenten mittels vorzugsweise nasschemischer Verfahren. Diese sind beispielsweise in den Druckschriften DE 14 67 468, DE 19 59 998, DE 20 09 566, DE 22 14 545, DE 22 15 191, DE 22 44 298, DE 23 13 331, DE 25 22 572, DE 31 37 808, DE 31 37 809, DE 31 51 355, DE 32 11 602 und DE 32 35 017 beschrieben.

Dazu werden die Substratplättchen in Wasser suspendiert. Das Aufbringen einer $TiO_2$-Schicht erfolgt dabei vorzugsweise analog zu dem in US 3,553,001 beschriebenen Verfahren. Dabei wird eine wässrige Titansalzlösung langsam zu einer Suspension des zu beschichtenden Pigmentes gegeben, die Suspension auf 50 bis 100 °C erhitzt und der pH-Wert im Bereich von 0,5 bis 5,0 durch gleichzeitige Zugabe einer Base, beispielsweise einer wässrigen Ammoniumhydroxidlösung oder einer wässrigen Alkalihydroxidlösung, nahezu konstant gehalten. Wenn die gewünschte $TiO_2$-Schichtdicke auf den Pigmentplättchen erreicht ist, wird die Zugabe der Titansalzlösung und der Base gestoppt. Da die Zugabe der Titansalzlösung so langsam erfolgt, dass eine quasi vollständige Abscheidung des Hydrolyseproduktes auf den Pigmentplättchen erfolgt, kommt es praktisch nicht zu Nebenfällungen. Das Verfahren ist als Titrationsverfahren bekannt.

Bei einem Mehrschichtsystem gemäß der Variante 2 der ersten Ausführungsform oder gemäß der zweiten Ausführungsform der vorliegenden Erfindung erfolgt das Aufbringen der niedrig brechenden Schicht aus einem Material mit einer Brechzahl $n < 1,8$, bei der es sich vorzugsweise um eine $SiO_2$-Schicht (kann aus Siliziumdioxid, Siliziumdioxidhydrat oder einer Mischung daraus bestehen) handelt, beispielsweise wie folgt:

Für die Aufbringung einer $SiO_2$-Schicht wird in der Regel eine Natrium-oder Kaliumwasserglaslösung eingesetzt. Die Ausfällung einer Siliziumdioxid- bzw. Siliziumdioxidhydratschicht erfolgt bei einem pH-Wert im Bereich von 6 bis 10, vorzugsweise von 7 bis 9.

Vorzugsweise wird dabei das vorab bereits mit einer Schicht, die aus $TiO_2$, $TiO_{2-x}$ oder einem der anderen genannten hochbrechenden, farblosen Materialien besteht, beschichtete Trägerteilchen in Wasser suspendiert und die Suspension auf eine Temperatur im Bereich von 50 bis 100°C erhitzt. Der pH-Wert wird im Bereich von 6 bis 10 eingestellt und durch gleichzeitige Zugabe einer verdünnten Mineralsäure, beispielsweise von HCl, $HNO_3$ oder $H_2SO_4$, konstant gehalten. Zu dieser Suspension wird eine Natrium- oder Kaliumwasserglaslösung gegeben. Sobald die gewünschte Schichtdicke an $SiO_2$ auf dem beschichteten Substrat erhalten ist, wird die Zugabe der Silikatlösung gestoppt und der Ansatz für weitere 0,5 Stunden nachgerührt.

Alternativ kann eine hydrolytische Beschichtung mit $SiO_2$ auch unter Verwendung organischer Siliziumverbindungen, wie beispielsweise TEOS, in einem sauer oder basisch katalysierten Verfahren über eine Sol-Gel-Reaktion erfolgen. Auch hierbei handelt es sich um ein nasschemisches Verfahren.

Als äußerste optisch aktive Schicht wird in jedem Falle eine $TiO_2$-Schicht aufgebracht.

Die Überführung der $TiO_2$-Schicht in $TiO_{2-x}$ erfolgt unter schwach reduzierenden Bedingungen im Gasstrom. Diesem wird ein Reduziergas zugesetzt und die Pigmente darin über einen Zeitraum von 5 bis 60 Minuten thermisch behandelt.

Besitzt das Ausgangspigment eine Mehrschichtstruktur aus mindestens drei Schichten, wobei sowohl die erste als auch die dritte Schicht des Schichtpakets aus $TiO_2$ besteht, wie vorab beschrieben, so kann die Überführung der jeweiligen $TiO_2$-Schicht in eine $TiO_{2-x}$-Schichten so erfolgen, dass jede der einzelnen Schichten separat in eine $TiO_{2-x}$-Schicht überführt wird, deren Zusammensetzung der Bedingung $0,01 \leq x \leq 0,04$ genügt (die Belegung mit allen weiteren Schichten erfolgt dann jeweils nach dem Reduzierschritt). Es ist jedoch auch möglich, lediglich die dritte, äußere Schicht aus $TiO_2$ durch die genannte reduzierende Behandlung in eine Schicht aus $TiO_{2-x}$ zu überführen. Im Sinne einer hohen Verfahrensökonomie ist die letztere Variante bevorzugt, da das nasschemische Aufbringungsverfahren der drei Schichten des jeweiligen Schichtpakets nicht unterbrochen werden muss und die Transparenz der resultierenden Pigmente besonders hohe Werte aufweist, wenn lediglich die äußere Schicht der Interferenzpigmente eine Zusammensetzung $TiO_{2-x}$ mit $0,01 \leq x \leq 0,04$ aufweist.

Es ist vorteilhaft, wenn die Pigmente bei der Reduktion in Bewegung gehalten werden. Die thermische Behandlung kann dabei beispielsweise in einem gasdichten Drehrohrofen unter Durchleitung des Gasstroms oder in einem Wirbelbettreaktor unter Durchleitung des Gasgemischs durch die Wirbelschicht stattfinden.

Erfindungsgemäß ist es von besonderer Bedeutung, dass bei der Reduktion von $TiO_2$ keine niederen Titanoxide, Titansuboxide oder Magneli-Phasen gebildet werden. Die Reduktion findet daher unter sehr schwach reduzierenden Bedingungen kontrolliert statt. So ist beispielsweise der Gehalt an Reduziergas im Gasgemisch gegenüber allgemein üblichen Reduzierbedingungen vermindert.

Der Anteil an Reduziergas im Gasgemisch liegt im Bereich von 0,05 bis 10 Vol.%, bezogen auf das Gesamtvolumen des Gasgemischs. Dabei wird der Anteil an Reduziergas abhängig von der Reaktionstemperatur gestaffelt.

Die eingesetzte Reaktionstemperatur liegt im Bereich von 400°C bis 800°C und ist damit auch vergleichsweise moderat. Je höher die Reaktionstemperatur gewählt wird, umso geringer muss der Anteil an Reduziergas im Gasgemisch sein, damit es nicht zur Ausbildung von Titansuboxiden kommt. Bei niedrigerer Reaktionstemperatur im vorab genannten Bereich kann dagegen der Gehalt an Reduziergas im Gasgemisch höher gewählt werden.

So kann der Anteil an Reduziergas im Gasgemisch bei einer Reaktionstemperatur von 400°C 5 bis 10 Vol.% betragen, während er bei einer Reaktionstemperatur von 800°C lediglich im Bereich von 0,05 bis <5 Vol.% liegen darf.

Insbesondere werden im Detail vorzugsweise die folgenden Abstimmungen von Reaktionstemperatur und Reduziergasanteil im Gasgemisch vorgenommen:

$T \leq 550°C$, vorzugsweise $\leq 500°C$: Reduziergasanteil: 5-10 Vol.%, insbesondere 5-8 Vol.%,

$T \leq 650°C$, vorzugsweise $\leq 600°C$: Reduziergasanteil: 2-5 Vol.%,

$T \leq 750°C$, vorzugsweise $\leq 700°C$: Reduziergasanteil: 1-2 Vol.%,

$T \leq 800°C$, Reduziergasanteil: 0,05-1 Vol.%.

Unter Einhaltung der genannten Bedingungen für die Reduktion kommt es nicht zur Ausbildung von Titansuboxiden in der $TiO_2$-Schicht, sondern lediglich zur Ausbildung eines Sauerstoffdefizits, so dass die entstehende Schicht die Zusammensetzung $TiO_{2-x}$ mit $0,01 \leq x \leq 0,04$ aufweist.

Im Röntgendiffraktogramm der entsprechenden Pigmentproben ist lediglich die jeweilige Kristallmodifikation Anatase und/oder Rutil zu finden.

Als Reduziergas können Wasserstoff, Ammoniak oder Kohlenwasserstoffverbindungen mit 1 bis 4 C-Atomen ($C_1$-$C_4$) eingesetzt werden. Diese sind dem Fachmann als Reduziergase bekannt, werden in der Regel ansonsten jedoch mit höherem Anteil im Gasstrom eingesetzt. Als $C_1$-$C_4$-Kohlenwasserstoffverbindungen kommen insbesondere Methan, Ethylen oder Propanon im Betracht. Als Trägergase kommen insbesondere Stickstoff oder Argon in Frage, die die weiteren Bestandteile des Gasgemischs darstellen. Besonders bevorzugt wird Formiergas ($N_2/H_2$) mit dem oben genannten geringen Anteil an Wasserstoff eingesetzt.

Die erfindungsgemäßen Interferenzpigmente können auch durch Glühen der Ausgangspigmente im Vakuum erhalten werden. Allerdings sind in diesem Falle die reduzierenden Bedingungen und damit die endgültige Zusammensetzung der $TiO_{2-x}$-Schicht schwerer zu kontrollieren. Aus diesem Grunde ist eine reduzierende Behandlung im Vakuum nicht bevorzugt.

Nach der thermischen Behandlung werden die erhaltenen Interferenzpigmente entweder unter den vorhandenen reduzierenden Bedingungen oder unter Schutzgas abgekühlt und klassiert.

Gegenstand der vorliegenden Erfindung ist auch die Verwendung der erfindungsgemäßen Interferenzpigmente in Farben, Lacken, Druckfarben, Kunststoffen, Sensoren, Sicherheitsanwendungen, Fußbodenbelägen, Textilien, Folien, keramischen Materialien, Gläsern, Papier, zur Lasermarkierung, im Wärmeschutz, als Photohalbleiter, in pigmenthaltigen Formulierungen, Pigmentpräparationen und Trockenpräparaten.

Bedingt durch ihr optisch variables Verhalten, ihre hohe Interferenzfarbstärke und Transparenz sind die erfindungsgemäßen Pigmente gut geeignet, lediglich auf Grund ihrer Farbeigenschaften zur Pigmentierung von Anwendungsmedien der vorab genannten Art eingesetzt zu werden. Dabei werden sie in der gleichen Weise wie übliche Interferenzpigmente eingesetzt. Besonders vorteilhaft ist jedoch, dass sie neben den attraktiven Farbeigenschaften auch über halbleitende elektrische Eigenschaften verfügen, die sie insbesondere für den Einsatz in technischen Anwendungen, die elektrisch halbleitfähige Beschichtungen erfordern, aber auch ganz besonders für die Anwendung in verschiedenen Sicherheitsprodukten geeignet machen, die gelegentlich zur Abprüfung von Sicherheitsmerkmalen elektrisch leitfähige oder halbleitfähige Pigmente in Beschichtungen benötigen. Solche Sicherheitsprodukte sind beispielsweise Banknoten, Schecks, Kreditkarten, Aktien, Pässe, Ausweisdokumente, Führerscheine, Eintrittskarten, Wertmarken, Steuermarken etc., um nur einige zu nennen.

Beim Einsatz der Pigmente in Lacken und Farben sind alle dem Fachmann bekannten Anwendungsbereiche möglich, wie z.B. Pulverlacke, Automobillacke, Druckfarben für den Tief-, Offset-, Sieb-, oder Flexodruck sowie Lacke in Außenanwendungen. Für die Herstellung von Druckfarben ist eine Vielzahl von Bindern, insbesondere wasserlösliche, aber auch lösemittelhaltige Typen, z.B. auf der Basis von Acrylaten, Methacrylaten, Polyestern, Polyurethanen, Nitrocellulose, Ethylcellulose, Polyamid, Polyvinylbutyrat, Phenolharzen, Melaminharzen, Maleinharzen, Stärke oder Polyvinylalkohol geeignet. Bei den Lacken kann es sich um Wasser- oder lösemittelbasierte Lacke handeln, wobei die Auswahl der Lackbestandteile dem Allgemeinwissen des Fachmannes unterliegt.

Die erfindungsgemäßen Pigmente können ebenso vorteilhaft zur Herstellung von elektrisch halbleitfähigen Kunststoffen und Folien eingesetzt werden, und zwar für alle dem Fachmann bekannten Anwendungen, die eine elektrische Halbleitfähigkeit erfordern. Als Kunststoffe eignen sich dabei alle gängigen Kunststoffe, beispielsweise Duromere und thermoplastische Kunststoffe. Die erfindungsgemäßen Pigmente unterliegen dabei denselben Bedingungen wie übliche Perlglanz- bzw. Interferenzpigmente. Besonderheiten der Einbringung in Kunststoffe sind daher beispielsweise in R. Glausch, M. Kieser, R. Maisch, G. Pfaff, J. Weitzel, Perlglanzpigmente, Curt Vincentz Verlag, 1996, 83 ff., beschrieben.

Die erfindungsgemäßen Pigmente sind auch zur Herstellung von fließfähigen Pigmentpräparationen und Trockenpräparaten geeignet, die ein oder mehrere erfindungsgemäße Pigmente, gegebenenfalls weitere Pigmente bzw. Farbmittel, Bindemittel und optional ein oder mehrere Additive enthalten. Unter Trockenpräparaten sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pearlets, Pellets, Granulate, Chips, Würstchen oder Briketts vor und weisen Teilchengrößen von etwa 0,2 bis 80 mm auf.

Bedingt durch ihre halbleitenden und Farbeigenschaften lassen sich die erfindungsgemäßen Interferenzpigmente mit besonderem Vorteil beispielsweise in antistatisch ausgerüsteten dekorativen Oberflächen einsetzen. Neben den durch den Herstellungsprozess gut steuerbaren elektrischen Eigenschaften sind die erfindungsgemäßen Interferenzpigmente transparent, ohne Eigenabsorption, von hoher Interferenzfarbstärke und zeigen klare Farbwechsel der Interferenzfarben unter verschiedenen Betrachtungswinkeln, so dass sie zur Farbgebung für ansonsten transparente, dielektrische Schichten in den vorab beschriebenen Anwendungsbereichen optimal verwendbar sind und nicht mit absorbierenden Farbmitteln oder anderen Effektpigmenten gemischt werden müssen, um dem Anwendungsmedium neben den halbleitenden Eigenschaften auch eine ansprechende Farbgebung unter Beibehaltung der Transparenz des Anwendungsmediums zu verleihen.

Die Kombination von optisch attraktiven Interferenzfarben, einem gut sichtbaren Farbwechsel unter verschiedenen Betrachtungswinkeln und halbleitenden Eigenschaften bei insgesamt hoher Transparenz in einem einzigen Pigment macht die erfindungsgemäßen Interferenzpigmente besonders geeignet zur Anwendung in Sicherheitsprodukten. Sie verfügen über ansprechende Interferenzfarben und optisch attraktive Farbwechsel im Bereich klarer Buntfarben, beispielsweise Gold-Grün-Flops, Rot-Grün-Flops oder Blau-Grün-Flops, die vorher für halbleitfähige Pigmente bei gleichzeitig hoher Transparenz im sichtbaren und nahen Infrarotbereich nicht zur Verfügung standen. Da es sich bei den erfindungsgemäßen Pigmenten um nicht absorbierende Effektpigmente handelt, sind sie problemlos und sehr vorteilhaft in Sicherheitsanwendungen mit Interferenzpigmenten kombinierbar, die über den gleichen Schichtaufbau und die gleiche Farbgebung der Interferenzfarben und wahlweise sogar über den gleichen Farbflop verfügen, aber anstatt der $TiO_{2-x}$-Schicht oder der $TiO_{2-x}$-Schichten ausschließlich $TiO_2$-Schichten aufweisen.

So können kombinierte Sicherheitsmerkmale erstellt werden, die beispielsweise aus zwei benachbarten Feldern bestehen, von denen eines in einer Beschichtung ein Interferenzpigment gemäß der vorliegenden Erfindung enthält, während das benachbarte Feld ein herkömmliches Interferenzpigment gleicher Größe, Zusammensetzung, Schichtaufbau und Interferenzfarbe im Glanzwinkel bei 90° in einer Beschichtung enthält mit dem einzigen Unterschied, dass keine der $TiO_2$-Schicht(en) des Vergleichspigmentes der Bedingung $TiO_{2-x}$ mit $0,01 \leq x \leq 0,04$ genügt, sondern aus stöchiometrischem $TiO_2$ besteht. Während die Farbgebung im Glanzwinkel bei 90°C und selbst die elektronenmikrokopischen Aufnahmen der Pigmente in dem ersten und zweiten Feld völlig übereinstimmen, unterscheiden sich beide Felder durch ihre elektrischen Eigenschaften, die sich bei dem mit den erfindungsgemäßen Interferenzpigmenten beschichteten Feld mit Detektoren durch beispielsweise Messung des elektrischen Widerstands der Schicht bei Gleich- oder Wechselspannung, der Dielektrizitätszahl, der Absorption oder Reflexion hochfrequenter magnetischer Felder oder durch Mikrowellenabsorption als verstecktes Sicherheitsmerkmal identifizieren lassen. Beim Abkippen des das Sicherheitsmerkmal aufweisenden Produktes gegenüber der Lichtquelle zeigt das Feld mit dem erfindungsgemäßen Pigment allerdings eine zweite, klare Interferenzfarbe, während das Vergleichsfeld eine unbunte (weiß-graue) Farbgebung annimmt, falls nicht noch andere Farbmittel in diesem Feld vorhanden sind. Unterscheiden sich die Interferenzpigmente in beiden Feldern jedoch lediglich im Vorliegen einer elektrischen Halbleitfähigkeit im erfindungsgemäßen Pigment und verfügen ansonsten über gleiche Interferenzfarben und Farbflops, unterscheiden sich die Testfelder lediglich hinsichtlich ihrer elektrischen Eigenschaften.

Ähnliche Kombinationen sind selbstverständlich auch mit Interferenzpigmenten in Vergleichsfeldern möglich, die lediglich über dieselben Farbeigenschaften, aber über einen verschiedenen Schichtaufbau verfügen. Darüber hinaus sind vielfältige Sicherheitsmerkmale möglich, bei denen die erfindungsgemäßen Interferenzpigmente entweder direkt in demselben Feld oder in benachbarten Feldern mit verschiedenfarbigen Interferenzpigmenten gemeinsam eingesetzt werden können.

Besonders bevorzugt erfolgt die Anwendung der erfindungsgemäßen Interferenzpigmente in Sicherheitsprodukten, die zu ihrer Prüfung dem Einfluss eines elektromagnetischen Feldes ausgesetzt werden. In einer solchen Anwendung zeigen die erfindungsgemäßen Interferenzpigmente beispielsweise eine Dämpfung oder auch Reflexion von hochfrequenten elektromagnetischen Feldern sowie eine gezielte Veränderung der elektrischen Flussdichte in einer ansonsten dielektrischen Beschichtung im elektrischen Feld. Dies ist auch bei Pigmentkonzentrationen unterhalb der Perkolationsschwelle der Fall. Bei der Abprüfung unsichtbarer Sicherheitsmerkmale für Sicherheitsprodukte ist dies von besonderem Vorteil, da die erfindungsgemäßen Interferenzpigmente beispielsweise zur Ablenkung von Feldlinien in elektrischen Feldern verwendet werden können, wodurch eine lokale Verstärkung des elektromagnetischen Feldes erzielt werden kann (ein so genannter "Hot Spot"). Mit Hilfe solcher Hot Spots können beispielsweise elektrolumineszierende Stoffe zum Leuchten gebracht werden. Gegenstand der vorliegenden Erfindung ist daher auch ein Sicherheitsprodukt, welches die erfindungsgemäßen Interferenzpigmente enthält.

Die Konzentration der erfindungsgemäßen Interferenzpigmente im jeweiligen Anwendungsmedium ist von den dort gewünschten Eigenschaften bezüglich Farbgebung und elektrischer Leitfähigkeit abhängig und kann vom Fachmann jeweils auf der Basis üblicher Rezepturen gewählt werden.

Obwohl die erfindungsgemäßen Interferenzpigmente über attraktive optische und elektrisch halbleitende Eigenschaften verfügen und damit als alleinige Effektpigmente in verschiedensten Anwendungen einsetzbar sind, ist es selbstverständlich möglich und je nach Anwendungszweck auch vorteilhaft, sie bei Bedarf mit organischen und/oder anorganischen Farbmitteln (insbesondere mit Weiß- oder Buntpigmenten) und/oder elektrisch leitfähigen Materialien und/oder anderen, nicht elektrisch leitfähigen Effektpigmenten zu mischen oder gemeinsam mit diesen in einer Anwendung, beispielsweise einer Beschichtung, einzusetzen.

Darüber hinaus können sie auch untereinander in verschiedenen Farbstellungen oder mit verschiedenen halbleitenden Eigenschaften gemischt werden, wenn sich daraus für die Anwendung Vorteile ergeben. Insbesondere können auch Gemische von zwei oder mehreren, voneinander verschiedenen Interferenzpigmenten vorteilhaft sein, bei denen jedes mindestens eine Schicht aufweist, die der Zusammensetzung $TiO_{2-x}$ mit $0,01 \leq x \leq 0,04$ entspricht, wobei sich die einzelnen Interferenzpigmente im Trägermaterial, in der materiellen Zusammensetzung der Schichten, in der Anzahl der Schichten, in der Interferenzfarbe, im Farbflop und/oder in der elektrischen Leitfähigkeit unterscheiden. Dabei müssen nicht zwangsläufig alle dieser Interferenzpigmente optisch variabel sein und damit erfindungsgemäße Interferenzpigmente darstellen. Vielmehr kann ein Teil dieser Interferenzpigmente auch aus Interferenzpigmenten gemäß der parallel eingereichten Patentanmeldung EP 13 003 084.4 derselben Anmelderin bestehen.

Die Mischungsverhältnisse bei allen vorab beschriebenen Mischungen sind nicht limitiert, solange die vorteilhaften Eigenschaften der erfindungsgemäßen Pigmente durch die zugemischten Fremdpigmente nicht negativ beeinflusst werden. Die erfindungsgemäßen Pigmente können in jedem Verhältnis mit anwendungsüblichen Zusatzstoffen, Füllstoffen und/oder Bindemittelsystemen gemischt werden.

Die erfindungsgemäßen Pigmente weisen optisch variable, attraktive, bunte Interferenzfarben von hoher Farbstärke und elektrisch halbleitende Eigenschaften auf, sind transparent und nahezu frei oder völlig frei von Eigenabsorption und zwar bis in den Bereich des nahen Infrarot hinein. Neben üblichen Anwendungen halbleitfähiger Pigmente eignen sie sich daher insbesondere für die Erzeugung sichtbarer und unsichtbarer multipler Sicherheitsmerkmale in Sicherheitsanwendungen.

Die vorliegende Erfindung soll nachfolgend an Hand von Beispielen erläutert, aber nicht auf diese beschränkt werden.

Beispiele:

Beispiel 1:

100 g gemahlene und klassierte $SiO_2$-Plättchen mit einer Dicke von 520 nm (Teilchengröße 10-60 $\mu$m) werden in 1900 ml entmineralisiertem Wasser suspendiert. Der Suspension werden im sauren Milieu bei 75°C unter Rühren langsam 100 ml einer Lösung aus 0,75 g konzentrierter HCl und 8,5 g $SnCl_4$ in Wasser zugegeben. Durch gleichzeitige Zugabe von Natronlauge wird der pH-Wert konstant bei 1,8 gehalten. Anschließend wird noch 30 min. bei 75°C nachgerührt, danach bei pH 1,5 durch langsame Zugabe einer wässrigen $TiCl_4$-Lösung (400g/l $TiCl_4$) und Konstanthalten des pH-Wertes mit 32%-iger Natronlauge mit $TiO_2$ beschichtet. Die Beschichtung wird nach Erreichen des gewünschten Farbendpunktes abgebrochen. Anschließend wird unter Rühren auf Raumtemperatur abgekühlt und die Reaktionsmischung neutralisiert. Die erhaltenen Pigmente werden über eine Nutsche abfiltriert, mit Wasser gewaschen und bei 140°C getrocknet.

Die getrockneten Pigmente werden einer thermischen Behandlung unter den in Tabelle 1 aufgeführten Bedingungen unterworfen.

Es wird ein weißliches Pigmentpulver erhalten, welches nach dem Aufziehen in einer Beschichtung auf einen schwarzen Karton unter steilem Betrachtungswinkel eine intensiv kupferfarbene Interferenzfarbe und unter flachem Winkel eine intensiv grüne Interferenzfarbe zeigt.

Tabelle 1:

Thermische Behandlung unter reduzierenden Bedingungen

| Beispiel | Atmosphäre | Temperatur | Dauer | Transparenz T | L* 45/90 (w) |
|---|---|---|---|---|---|
| 2 (Vergl.) | Luft | 750°C | 30 min. | 47 | 84 |
| 3 (Vergl.) | $N_2$ | 800°C | 30 min. | 43 | 83 |
| 4 (Erf.) | $N_2/H_2(0,5\% H_2)$ | 700°C | 30 min. | 39 | 76 |
| 5 (Erf.) | $N_2/H_2(0,5\% H_2)$ | 800°C | 30 min. | 38 | 75 |
| 6 (Erf.) | $N_2/H_2(5\% H_2)$ | 500°C | 30 min. | 43 | 82 |
| 7 (Vergl.) | $N_2/H_2(5\% H_2)$ | 800°C | 30 min. | 31 | 65 |

Beispiel 8:

Prüfung der elektrischen Eigenschaften im Lackfilm:

Die nach der thermischen Behandlung entsprechend Tabelle 1 erhaltenen Pigmente werden in NC-Lack dispergiert (12 % Collodium/Butylacrylat in einem Lösemittelgemisch). Mit der Lackzubereitung werden PET-Folien beschichtet. Die Konzentration der Pigmente in der trockenen Lackschicht beträgt 48,1 Gew.-%, die Schichtdicke der Lackschicht 50 $\mu$m. Nach Trocknung der Lackschichten wird mit Hilfe einer Federzungenelektrode (1 cm Elektrodenabstand, Länge 10 cm) der Oberflächenwiderstand bei einer Messspannung von 1000 V gemessen. Die Ergebnisse sind in Tabelle 2 dargestellt. Ein Vergleichslackfilm ohne leitfähiges Pigment zeigt einen spezifischen Widerstand von > $10^{12}$ Ohm.

Beispiel 9:

Prüfung der koloristischen Eigenschaften:

Proben der Pigmente gemäß Tabelle 1 werden in NC-Lack gemäß Beispiel 8 dispergiert (1,7 Gew.% Pigment im Lack). Der Lack wird dann mit einer Nassschichtdicke von 500 $\mu$m auf schwarz/weiße Pappkarten aufgezogen und getrocknet. Die getrocknete Schicht hat eine Dicke von 40 $\mu$m und eine Pigmentmassekonzentration (PMK) von 12,3 %. Die Karten werden dann mit einem Spektrophotometer (ETA-Optik der Fa. Steag Optik) in Reflexion unter folgenden Winkeln vermessen:

45°/90° über schwarz und weiß, 40°/150° (flacher Betrachtungswinkel) sowie 80°/110° (steiler Betrachtungswinkel) über schwarz, wobei der Winkel 90° die Senkrechte zur Ebene der Karte darstellt.

Aus den Rohdaten der Messungen werden dann die L*-, a*-, b*-Werte ermittelt. Der L*-Wert über Weiß ist ein Maß für die Körperfarbe des Pigmentes. Die Differenz der Werte unter steilem und flachem Betrachtungswinkel ist ein Maß für den Farbflop. Die Werte sind ebenfalls in Tabelle 2 aufgeführt.

Tabelle 2:

Widerstände und farbmetrische Werte der Pigmente

| Beispiel | L*a*b*(s) 40°/150° | 80°/110° | Widerstand |
|---|---|---|---|
| 2 (Vergl.) | 169,5/-66,0/67,6 | 139,1/39,1/76,8 | > 1 TOhm |
| 3 (Vergl.) | 174,7/-72,2/74,1 | 137,8/34,6/79,0 | > 1 TOhm |
| 4 (Erf.) | 169,4/-68,5/78,8 | 135,0/35,1/88,9 | 44 MOhm |
| 5 (Erf.) | 170,0/-67,0/73,6 | 137,2/35,0/83,6 | 48 MOhm |
| 6 (Erf.) | 176,5/-72,4/73,0 | 138,1/39,1/74,5 | 37 MOhm |
| 12 (Vergl.) | 165,4/-64,6/66,3 | 132,4/32,8/68,3 | 17 MOhm |

Beispiel 10 (Vergleich)

3-Schicht-System mit $SiO_2$-Zwischenschicht:

150 g Glimmer (Teilchengröße 10-60 $\mu$m) werden in 2 l entmineralisiertem Wasser suspendiert. Zu dieser Suspension werden bei 75°C eine salzsaure SnCl$_4$-Lösung (5,3 g SnCl$_4$) und 280 ml einer wässrigen TiCl$_4$-Lösung (400 g TiCl$_4$/l) langsam hinzudosiert. Der pH-Wert wird während der gesamten Zugabe mit NaOH-Lösung bei 1,8 konstant gehalten. Nach beendeter Zugabe wird zur Vervollständigung der Fällung noch 30 min bei 75°C nachgerührt.

Danach wird der pH-Wert der Suspension mit Natronlauge auf 7,5 eingestellt und 1140 ml einer Natronwasserglas-Lösung (ca. 14 Gew.-% SiO$_2$) werden bei 75°C langsam zudosiert. Der pH-Wert wird mit 10%-iger Salzsäure konstant gehalten. Nach beendeter Zugabe wird noch 30 min bei 75°C nachgerührt.

Zur Auffällung der äußeren TiO$_2$-Schicht wird der pH-Wert wieder auf 1,8 eingestellt und es werden 5 g SnCl$_4$ in salzsaurer Lösung unter Rühren langsam zudosiert. Anschließend wird TiCl$_4$-Lösung bis zum Erreichen des gewünschten Farbendpunktes zugegeben (ca. 220 ml TiCl$_4$-Lösung, 400 g TiCl$_4$/l).

Anschließend wird die Suspension abgekühlt, das erhaltene Pigment abfiltriert, mit Wasser gewaschen und danach 30 min bei 800°C unter Luft geglüht.

Es wird ein weißliches Pigmentpulver erhalten, welches nach dem Aufziehen in einer Beschichtung auf einen schwarzen Karton unter steilem Betrachtungswinkel eine intensiv rötlich-violette Interferenzfarbe und unter flachem Winkel eine goldene Interferenzfarbe zeigt. Die Helligkeit des Pigmentes (L* 45°/90° über weiß) beträgt 85, die Transparenz T ist 46. Die Prüfung der elektrischen Eigenschaften ergibt keine Leitfähigkeit (spezifischer Widerstand < 10$^{12}$ Ohm).

Beispiel 11

Halbleitendes Pigment mit 3-Schicht-System:

10 g des Pigmentes aus Beispiel 10 werden in einem Rohrofen 30 min bei 500 °C unter Formiergas (5% H$_2$) geglüht und danach unter Stickstoff auf Raumtemperatur abgekühlt. Im Lackabstrich auf einem schwarzen Karton zeigt das Pigment eine gegenüber dem Pigment aus Beispiel 10 nahezu unveränderte Farbstellung. Die Helligkeit des Pigmentes (L* 45°/90° über weiß) beträgt 81, die Transparenz T ist 40. Die Prüfung der elektrischen Eigenschaften gemäß Beispiel 8 ergibt einen spezifischen Widerstand von 40 MOhm.

Zur Überprüfung der TiO$_2$-Modifikation werden von dem erhaltenen Pigment Röntgendiffraktogramme aufgenommen. Diese zeigen das Titanoxid in der Rutilmodifikation und keine Titansuboxid-Phasen.

Beispiel 12 (Vergleich):

Stark reduziertes Pigment mit dunkler Körperfarbe:

Das Pigment aus Beispiel 1 wird unter Formiergas bei 800°C 45 Minuten geglüht. Man erhält ein Pigment mit dunklerer Körperfarbe. Von dem Pigment werden Lackfolien und Lackkarten gemäß den Beispielen 8 und 9 hergestellt und vermessen. Der Widerstand der Folie beträgt 17 MOhm, die Transparenz ist 31. Das Pigment zeigt einen guten Farbwechsel beim Betrachten unter flachem und steilem Winkel, aber verbunden mit einer bräunlich grauen Körperfarbe, die den Farbeindruck auf weißem Hintergrund stört. Die erfindungsgemäßen Pigmente haben dagegen eine solch geringe Körperfarbe, dass diese beim Betrachten auf weißem Hintergrund nicht auffällt. Der elektrische Widerstand der Lackfolie, die das Pigment gemäß Beispiel 12 enthält, ist nur unwesentlich geringer als die Widerstände der Lackfolien mit den erfindungsgemäßen transparenten Interferenzpigmenten. Für antistatisch-dissipative Beschichtungen sind alle Widerstände ausreichend niedrig.

**Patentansprüche**

1. Transparente, optisch variable, elektrisch halbleitfähige, plättchenförmige Interferenzpigmente auf der Basis eines plättchenförmigen, transparenten Trägers mit mindestens einer ein Titanoxid enthaltenden Schicht auf dem Träger, wobei

a) der plättchenförmige Träger eine Dicke von mindestens 80 nm aufweist und zu mindestens 80 Gew.-%, bezogen auf die Gesamtmasse des Trägers, aus Siliziumdioxid und/oder Siliziumdioxidhydrat besteht, und wobei sich auf dem Träger eine äußere Schicht aus TiO$_{2-x}$, befindet, wobei $0,01 \leq x \leq 0,04$ ist, oder
b) der plättchenförmige Träger mindestens mit einem Schichtpaket aus

- einer ersten Schicht aus einem farblosen Material mit einer Brechzahl n $\geq$ 1,8,
- einer zweiten Schicht aus einem farblosen Material mit einer Brechzahl n < 1,8 und einer geometrischen Schichtdicke von $\geq$ 50 nm, sowie

- einer dritten, äußeren Schicht aus einem farblosen Material mit einer Brechzahl n ≥ 1,8 beschichtet ist,

wobei mindestens die dritte, äußere Schicht aus $TiO_{2-x}$ besteht und wobei $0,01 \leq x \leq 0,04$ ist,
und wobei die Interferenzpigmente einen spezifischen Pulverwiderstand im Bereich von 0,1 bis 100 MOhm*cm aufweisen, bestimmt mit jeweils 0,5 g Pigment in einem Acrylglas-Rohr mit einem Durchmesser von 2 cm, wobei das Pigment mit einem Metallstempel unter einem Gewicht von 10 kg gegen eine Metallelektrode gepresst wird und die Schichtdicke L des komprimierten Pigmentes in die Gleichung $\rho = R^* \pi^*(d/2)^2/L$ (Ohm*cm) eingeht.

2. Interferenzpigmente gemäß Anspruch 1, **dadurch gekennzeichnet, dass** es sich bei dem plättchenförmigen, transparenten Träger um

    a) $SiO_2$-Plättchen, oder
    b) natürliche oder synthetische Glimmerplättchen, Plättchen aus Kaolin, Sericit oder Talk, Glasplättchen, Borosilikatplättchen, $Al_2O_3$-Plättchen oder Gemische aus zwei oder mehreren von diesen handelt.

3. Interferenzpigment gemäß Anspruch 1 oder 2, **dadurch gekennzeichnet, dass** es aus einem plättchenförmigen Träger, der zu mindestens 80 Gew.-%, bezogen auf die Gesamtmasse des Trägers, aus Siliziumdioxid und/oder Siliziumdioxidhydrat besteht, und einer den Träger umhüllenden Schicht aus $TiO_{2-x}$ besteht.

4. Interferenzpigment gemäß einem oder mehreren der Ansprüche 1 bis 3, **dadurch gekennzeichnet, dass** es einen plättchenförmigen Träger, der zu mindestens 80 Gew.-%, bezogen auf die Gesamtmasse des Trägers, aus Siliziumdioxid und/oder Siliziumdioxidhydrat besteht, und eine Schichtfolge aus mindestens drei Schichten auf dem Träger umfasst, wobei

    - eine erste Schicht aus einem farblosen Material mit einer Brechzahl n ≥ 1,8 besteht,
    - eine zweite Schicht aus einem farblosen Material mit einer Brechzahl n < 1,8 besteht, sowie
    - eine dritte, äußere Schicht aus einem farblosen Material mit einer Brechzahl n ≥ 1,8 besteht,

wobei mindestens die dritte, äußere Schicht aus $TiO_{2-x}$ besteht und wobei $0,01 \leq x \leq 0,04$ ist.

5. Interferenzpigment gemäß einem oder mehreren der Ansprüche 1 bis 4, **dadurch gekennzeichnet, dass** das farblose Material mit einer Brechzahl ≥ 1,8 ausgewählt ist aus $TiO_2$, Titandioxidhydrat, ZnO, $ZrO_2$ und/oder Mischphasen aus diesen.

6. Interferenzpigment gemäß einem oder mehreren der Ansprüche 1 bis 5, **dadurch gekennzeichnet, dass** das farblose Material mit einer Brechzahl n ≥ 1,8 aus $TiO_2$ oder $TiO_{2-x}$ mit $0,01 \leq x \leq 0,04$ besteht und in der Rutil-Kristallmodifikation vorliegt.

7. Interferenzpigment gemäß einem oder mehreren der Ansprüche 1 bis 6, **dadurch gekennzeichnet, dass** das farblose Material mit einer Brechzahl n < 1,8 ausgewählt ist aus $SiO_2$, $Al_2O_3$, Siliziumoxidhydrat, Aluminiumoxidhydrat, $MgF_2$, oder aus Gemischen von zwei oder mehreren von diesen.

8. Interferenzpigment gemäß einem oder mehreren der Ansprüche 1 bis 7, **dadurch gekennzeichnet, dass** jede Schicht aus einem farblosen Material mit einer Brechzahl n ≥ 1,8 aus $TiO_{2-x}$ mit $0,01 \leq x \leq 0,04$ besteht.

9. Interferenzpigment gemäß einem oder mehreren der Ansprüche 1 bis 8, **dadurch gekennzeichnet, dass** die Schicht aus $TiO_{2-x}$ mit 0,1 bis 3 Mol-% Sn dotiert ist.

10. Verwendung von transparenten, optisch variablen, elektrisch halbleitfähigen, plättchenförmigen Interferenzpigmenten gemäß einem oder mehreren der Ansprüche 1 bis 9 in Farben, Lacken, Druckfarben, Kunststoffen, Sensoren, Sicherheitsanwendungen, Fußbodenbelägen, Textilien, Folien, keramischen Materialien, Gläsern, Papier, zur Lasermarkierung, im Wärmeschutz, als Photohalbleiter, in pigmenthaltigen Formulierungen, Pigmentpräparationen und Trockenpräparaten.

11. Verwendung gemäß Anspruch 10, **dadurch gekennzeichnet, dass** die Interferenzpigmente mit organischen und/oder anorganischen Farbmitteln und/oder elektrisch leitfähigen Materialien und/oder nicht elektrisch leitfähigen Effektpigmenten im Gemisch eingesetzt werden.

# EP 3 010 980 B2

**12.** Verwendung gemäß Anspruch 10 oder 11, **dadurch gekennzeichnet, dass** die Interferenzpigmente in einer Mischung aus zwei oder mehreren, voneinander verschiedenen Interferenzpigmenten, von denen jedes eine $TiO_{2-x}$-Schicht mit $0,01 \leq x \leq 0,04$ aufweist, wobei sich diese Interferenzpigmente im Trägermaterial, in der Zusammensetzung der Schichten, in der Anzahl der Schichten, in der Interferenzfarbe, im Farbflop und/oder in der elektrischen Leitfähigkeit unterscheiden, verwendet werden.

**13.** Verwendung gemäß einem oder mehreren der Ansprüche 10 bis 12, **dadurch gekennzeichnet, dass** die Interferenzpigmente in Sicherheitsprodukten eingesetzt werden, die dem Einfluss eines elektromagnetischen Feldes ausgesetzt werden.

**14.** Sicherheitsprodukt, enthaltend Interferenzpigmente gemäß einem oder mehreren der Ansprüche 1 bis 9.

**15.** Sicherheitsprodukt gemäß Anspruch 14, **dadurch gekennzeichnet, dass** es sich um eine Banknote, einen Scheck, eine Kreditkarte, eine Aktie, einen Pass, ein Ausweisdokument, einen Führerschein, eine Eintrittskarte, eine Wertmarke oder eine Steuermarke handelt.


## Claims

**1.** Transparent, optically variable, electrically semiconducting, flake-form interference pigments based on a flake-form, transparent support with at least one layer comprising a titanium oxide on the support, where

> a) the flake-form support has a thickness of at least 80 nm and consists of at least 80% by weight, based on the total weight of the support, of silicon dioxide and/or silicon dioxide hydrate, and where an outer layer of $TiO_{2-x}$ where $0.01 \leq x \leq 0.04$ is located on the support, or
> b) the flake-form support is coated at least with a layer package comprising
>
>> - a first layer comprising a colourless material having a refractive index $n \geq 1.8$,
>> - a second layer comprising a colourless material having a refractive index $n < 1.8$ and a geometrical layer thickness of $\geq 50$ nm, and
>> - a third, outer layer comprising a colourless material having a refractive index $n \geq 1.8$,

where at least the third, outer layer consists of $TiO_{2-x}$ and where $0.01 \leq x \leq 0.04$,
and where the interference pigments have a specific powder resistance in the range from 0.1 to 100 Mohm*cm, determined with in each case 0.5 g of pigment in an acrylic glass tube having a diameter of 2 cm, where the pigment is pressed against a metal electrode with a metal ram under a weight of 10 kg and the layer thickness L of the compressed pigment is entered into the equation $p = R*\pi*(d/2)^2/L$ (ohm*cm).

**2.** Interference pigments according to Claim 1, **characterised in that** the flake-form, transparent support is

> a) $SiO_2$ flakes, or
> b) natural or synthetic mica flakes, kaolin, sericite or talc flakes, glass flakes, borosilicate flakes, $Al_2O_3$ flakes or mixtures of two or more thereof.

**3.** Interference pigment according to Claim 1 or 2, **characterised in that** it consists of a flake-form support which consists of at least 80% by weight, based on the total weight of the support, of silicon dioxide and/or silicon dioxide hydrate, and a layer of $TiO_{2-x}$ surrounding the support.

**4.** Interference pigment according to one or more of Claims 1 to 3, **characterised in that** it comprises a flake-form support which consists of at least 80% by weight, based on the total weight of the support, of silicon dioxide and/or silicon dioxide hydrate, and a layer sequence comprising at least three layers on the support, where

> - a first layer consists of a colourless material having a refractive index $n \geq 1.8$,
> - a second layer consists of a colourless material having a refractive index $n < 1.8$, and
> - a third, outer layer consists of a colourless material having a refractive index $n \geq 1.8$,

where at least the third, outer layer consists of $TiO_{2-x}$ and where $0.01 \leq x \leq 0.04$.

14

5. Interference pigment according to one or more of Claims 1 to 4, **characterised in that** the colourless material having a refractive index $\geq$ 1.8 is selected from $TiO_2$, titanium dioxide hydrate, ZnO, $ZrO_2$ and/or mixed phases thereof.

6. Interference pigment according to one or more of Claims 1 to 5, **characterised in that** the colourless material having a refractive index n $\geq$ 1.8 consists of $TiO_2$ or $TiO_{2-x}$ where $0.01 \leq x \leq 0.04$ and is in the rutile crystal modification.

7. Interference pigment according to one or more of Claims 1 to 6, **characterised in that** the colourless material having a refractive index n < 1.8 is selected from $SiO_2$, $Al_2O_3$, silicon oxide hydrate, aluminium oxide hydrate, $MgF_2$, or from mixtures of two or more thereof.

8. Interference pigment according to one or more of Claims 1 to 7, **characterised in that** each layer comprising a colourless material having a refractive index n $\geq$ 1.8 consists of $TiO_{2-x}$ where $0.01 \leq x \leq 0.04$.

9. Interference pigment according to one or more of Claims 1 to 8, **characterised in that** the layer of $TiO_{2-x}$ is doped with 0.1 to 3 mol% of Sn.

10. Use of transparent, optically variable, electrically semiconducting, flake-form interference pigments according to one or more of Claims 1 to 9 in paints, coatings, printing inks, plastics, sensors, security applications, floorcoverings, textiles, films, ceramic materials, glasses, paper, for laser marking, in heat protection, as photosemiconductors, in pigment-containing formulations, pigment preparations and dry preparations.

11. Use according to Claim 10, **characterised in that** the interference pigments are employed as a mixture with organic and/or inorganic colorants and/or electrically conducting materials and/or non-electrically conducting effect pigments.

12. Use according to Claim 10 or 11, **characterised in that** the interference pigments are used in a mixture of two or more interference pigments which are different from one another, each of which has a $TiO_{2-x}$ layer where $0.01 \leq x \leq 0.04$, where these interference pigments differ in the support material, in the composition of the layers, in the number of layers, in the interference colour, in the colour flop and/or in the electrical conductivity.

13. Use according to one or more of Claims 10 to 12, **characterised in that** the interference pigments are employed in security products which are subjected to the influence of an electromagnetic field.

14. Security product containing interference pigments according to one or more of Claims 1 to 9.

15. Security product according to Claim 14, **characterised in that** it is a bank note, a cheque, a credit card, a share, a passport, an identity document, a driving licence, an entry ticket, a revenue stamp or a tax stamp.

**Revendications**

1. Pigments d'interférence sous forme de flocons électriquement semiconducteurs optiquement variables et transparents basés sur un support transparent sous forme de flocons avec au moins une couche comprenant un oxyde de titane sur le support, où

   a) le support sous forme de flocons présente une épaisseur d'au moins 80 nm et est constitué par au moins 80 % en poids, sur la base du poids total du support, de dioxyde de silicium et/ou d'hydrate de dioxyde de silicium, et où une couche externe en $TiO_{2-x}$ où $0,01 \leq x \leq 0,04$ est placée sur le support, ou
   b) le support sous forme de flocons est revêtu d'au moins un ensemble de couches comprenant :

      - une première couche qui comprend un matériau incolore qui présente un indice de réfraction n $\geq$ 1,8,
      - une deuxième couche qui comprend un matériau incolore qui présente un indice de réfraction n < 1,8 et une épaisseur de couche géométrique $\geq$ 50 nm, et
      - une troisième couche externe qui comprend un matériau incolore qui présente un indice de réfraction n $\geq$ 1,8,

   où au moins la troisième couche externe est constituée par du $TiO_{2-x}$ et où $0,01 \leq x \leq 0,04$,
   et où les pigments d'interférence présentent une résistance de poudre spécifique à l'intérieur de la plage qui va de 0,1 à 100 Mohm*cm, laquelle est déterminée avec, dans chaque cas, 0,5 g de pigment dans un tube en verre acrylique qui présente un diamètre de 2 cm, où le pigment est pressé contre une électrode en métal à l'aide d'un vérin en métal sous un poids de 10 kg et l'épaisseur de couche L du pigment compressé est entrée dans l'équation $p = R^* \pi^* (d/2)^2 / L$ (ohm*cm).

2. Pigments d'interférence selon la revendication 1, **caractérisés en ce que** le support transparent sous forme de flocons est

a) des flocons de $SiO_2$, ou
b) des flocons de mica naturel ou synthétique, du kaolin, des flocons de séricite ou de talc, des flocons de verre, des flocons de borosilicate, des flocons d'$Al_2O_3$ ou des mélanges de deux ou plus de ceux-ci.

3. Pigment d'interférence selon la revendication 1 ou 2, **caractérisé en ce qu'**il est constitué par un support sous forme de flocons qui est constitué par au moins 80 % en poids, sur la base du poids total du support, de dioxyde de silicium et/ou d'hydrate de dioxyde de silicium, et par une couche en $TiO_{2-x}$ qui entoure le support.

4. Pigment d'interférence selon une ou plusieurs des revendications 1 à 3, **caractérisé en ce qu'**il comprend un support sous forme de flocons qui est constitué par au moins 80 % en poids, sur la base du poids total du support, de dioxyde de silicium et/ou d'hydrate de dioxyde de silicium, et une séquence de couches comprenant au moins trois couches sur le support, où :

- une première couche est constituée par un matériau incolore qui présente un indice de réfraction $n \geq 1,8$,
- une deuxième couche est constituée par un matériau incolore qui présente un indice de réfraction $n < 1,8$, et
- une troisième couche externe est constituée par un matériau incolore qui présente un indice de réfraction $n \geq 1,8$,

où au moins la troisième couche externe est constituée par du $TiO_{2-x}$ et où $0,01 \leq x \leq 0,04$.

5. Pigment d'interférence selon une ou plusieurs des revendications 1 à 4, **caractérisé en ce que** le matériau incolore qui présente un indice de réfraction $\geq 1,8$ est sélectionné parmi le $TiO_2$, l'hydrate de dioxyde de titane, le ZnO, le $ZrO_2$ et/ou des phases mixtes de ceux-ci.

6. Pigment d'interférence selon une ou plusieurs des revendications 1 à 5, **caractérisé en ce que** le matériau incolore qui présente un indice de réfraction $n \geq 1,8$ est constitué par du $TiO_2$ ou du $TiO_{2-x}$ où $0,01 \leq x \leq 0,04$ et est la modification cristalline rutile.

7. Pigment d'interférence selon une ou plusieurs des revendications 1 à 6, **caractérisé en ce que** le matériau incolore qui présente un indice de réfraction $n < 1,8$ est sélectionné parmi le $SiO_2$, l'$Al_2O_3$, l'hydrate d'oxyde de silicium, l'hydrate d'oxyde d'aluminium, le $MgF_2$, ou parmi des mélanges de deux ou plus de ceux-ci.

8. Pigment d'interférence selon une ou plusieurs des revendications 1 à 7, **caractérisé en ce que** chaque couche comprenant un matériau incolore qui présente un indice de réfraction $n \geq 1,8$ est constitué par du $TiO_{2-x}$ où $0,01 \leq x \leq 0,04$.

9. Pigment d'interférence selon une ou plusieurs des revendications 1 à 8, **caractérisé en ce que** la couche en $TiO_{2-x}$ est dopée avec 0,1 à 3 % (pourcentage molaire) de Sn.

10. Utilisation de pigments d'interférence sous forme de flocons électriquement semiconducteurs optiquement variables et transparents selon une ou plusieurs des revendications 1 à 9 dans des peintures, des revêtements, des encres d'impression, des matières plastiques, des capteurs, des applications de sécurité, des revêtements de sol, des textiles, des films, des matériaux de céramique, des verres, du papier, pour le marquage laser, en protection thermique, en tant que photosemiconducteurs, dans des formulations contenant des pigments, des préparations de pigments et des préparations sèches.

11. Utilisation selon la revendication 10, **caractérisée en ce que** les pigments d'interférence sont utilisés en tant que mélange avec des colorants organiques et/ou inorganiques et/ou des matériaux électriquement conducteurs et/ou des pigments d'effet non électriquement conducteurs.

12. Utilisation selon la revendication 10 ou 11, **caractérisée en ce que** les pigments d'interférence sont utilisés selon un mélange de deux pigments d'interférence ou plus qui sont différents l'un de l'autre ou les uns des autres, dont chacun comporte une couche en $TiO_{2-x}$ où $0{,}01 \leq x \leq 0{,}04$, où ces pigments d'interférence diffèrent en termes de matériau de support, de composition des couches, de nombre de couches, de couleur d'interférence, de variation de couleur et/ou de conductivité électrique.

13. Utilisation selon une ou plusieurs des revendications 10 à 12, **caractérisée en ce que** les pigments d'interférence sont utilisés dans des produits de sécurité qui sont soumis à l'influence d'un champ électromagnétique.

14. Produit de sécurité contenant des pigments d'interférence selon une ou plusieurs des revendications 1 à 9.

15. Produit de sécurité selon la revendication 14, **caractérisé en ce qu'**il s'agit d'un billet de banque, d'un chèque, d'une carte de crédit, d'une action, d'un passeport, d'un document d'identité, d'un permis de conduire, d'un ticket d'entrée, d'un timbre fiscal ou d'un timbre-taxe.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1748903 A
- EP 0960912 A
- DE 19953655
- EP 1114104 A
- WO 2009077122 A
- WO 9308237 A
- EP 13003084 A
- DE 1467468
- DE 1959998
- DE 2009566
- DE 2214545

- DE 2215191
- DE 2244298
- DE 2313331
- DE 2522572
- DE 3137808
- DE 3137809
- DE 3151355
- DE 3211602
- DE 3235017
- US 3553001 A

**In der Beschreibung aufgeführte Nicht-Patentliteratur**

- Mondial Coleur 85. *Colorimetric evaluation of pearlescent pigments, Congress,* 1985

- **R. GLAUSCH ; M. KIESER ; R. MAISCH, G ; PFAFF, J. WEITZEL.** Perlglanzpigmente. Curt Vincentz Verlag, 1996, 83